# EUROPEAN PATENT APPLICATION

(11) **EP 4 512 687 A1**
(43) Date of publication of application: **26.02.2025**
(21) Application number: 23791140.9
(22) Date of filing: 14.04.2023
(51) Int. Cl.: B60W 60/00, B60W 50/00, B60W 40/00, G05D 1/02

(54) **TRAJECTORY PREDICTION METHOD AND SYSTEM IN AUTONOMOUS DRIVING SYSTEM**

(30) Priority: 22.04.2022 CN 202210430682
(71) Applicant: Wuhan Lotus Cars Co., Ltd., Wuhan, Hubei 430070 (CN)
(72) Inventor: SONG, Yongkang, Wuhan, Hubei 430070 (CN); XIAO, Yang, Wuhan, Hubei 430070 (CN); CHEN, Yucheng, Wuhan, Hubei 430070 (CN); DENG, Jie, Wuhan, Hubei 430070 (CN); TIAN, Xiangyuan, Wuhan, Hubei 430070 (CN); XIAO, Sheng, Wuhan, Hubei 430070 (CN)
(74) Representative: Barker Brettell LLP
(86) International application number: PCT/CN2023/088404
(87) International publication number: WO 2023/202485

(57) **Abstract**

A trajectory prediction method and system in an autonomous driving system. The trajectory prediction method in the autonomous driving system includes the following step: obtaining result information on sensing an obstacle, to perform a trajectory prediction for a vehicle; and the method further includes the following steps: obtaining a high-precision map of a current frame and/or a travelable area in a map of a current frame, and obtaining trajectory planning information for a previous frame for the vehicle; determining a trajectory prediction result for the current frame according to the high-precision map of the current frame and/or the travelable area in the map of the current frame; correcting the trajectory prediction result for the current frame according to the trajectory planning information for the previous frame, to obtain a corrected trajectory prediction result for the current frame. In the prediction method, during prediction, the high-precision map of the current frame and/or the travelable area in the map of the current frame are/is obtained, and the trajectory planning information for the previous frame for the vehicle is obtained, which can fully ensure a generated prediction trajectory being within the travelable area.

## Description

### TECHNICAL FIELD

This invention relates to the field of autonomous driving and, in particular, to a trajectory prediction method and system in an autonomous driving system.

### BACKGROUND

Trajectory prediction is an important part of autonomous driving. According to information collected by an environment sensing module, a future trajectory of an obstacle in an environment is predicted and input into a planning module for reasonable and accurate planning of a path, so as to avoid an occurrence of a collision between a vehicle and the obstacle. When a trajectory prediction in existing autonomous driving is performed, a future trajectory of an obstacle is usually predicted only according to sensed environmental information, a prediction result is given to the planning module, and the planning module performs planning on a vehicle trajectory according to the prediction result. The inventors believe that, when the trajectory prediction in the existing technical solution is performed, a vehicle trajectory planning result is not considered, which may make the trajectory prediction not accurate and reasonable enough.

### SUMMARY

A purpose of the present invention is to provide a trajectory prediction method and system in an autonomous driving system which cannot make an accurate enough and reasonable enough trajectory prediction.

A further purpose of the present invention is to enable a trajectory prediction method in an autonomous driving system to obtain more diversified input information, so as to compensate for limitation of a vehicle trajectory prediction.

In particular, the present invention provides a trajectory prediction method in an autonomous driving system, obtaining result information on sensing an obstacle, to perform a trajectory prediction for a vehicle; and further including the following steps:
obtaining a high-precision map of a current frame and/or a travelable area in a map of a current frame, and obtaining trajectory planning information for a previous frame for the vehicle;
determining a trajectory prediction result for the current frame according to the high-precision map of the current frame and/or the travelable area in the map of the current frame;
correcting the trajectory prediction result for the current frame according to the trajectory planning information for the previous frame, to obtain a corrected trajectory prediction result for the current frame.

Further, the step of correcting the trajectory prediction result for the current frame according to the trajectory planning information for the previous frame to obtain the corrected trajectory prediction result for the current frame specifically includes the following steps:
performing encoding on the high-precision map of the current frame and/or the travelable area in the map of the current frame to obtain a first encoding result;
receiving the trajectory planning information for the previous frame for the vehicle and information on sensing the obstacle, and performing encoding on the trajectory planning information for the previous frame and the information on sensing the obstacle to obtain a second encoding result;
performing interaction relationship modeling on the first encoding result and the second encoding result;
decoding a high-dimensional feature used in a process of the modeling into a variety of visual information according to a requirement on output information.

Further, in the step of decoding the high-dimensional feature used in the process of the modeling into the variety of visual information according to the requirement on the output information, multiple possible trajectories are evaluated by a neural network under multiple assumed interaction scenarios, to output an optimal trajectory under the multiple assumed interaction scenarios.

Further, the visual information includes a trajectory map, a probability map, or a trajectory heat map.

Further, the step of determining the trajectory prediction result for the current frame according to the high-precision map of the current frame and/or the travelable area in the map of the current frame specifically includes the following steps:
taking the high-precision map or the travelable area in the map as an input to the neural network;
generating, by the neural network, a plurality of possible trajectories as possible traveling paths for the vehicle.

Further, the step of correcting the trajectory prediction result for the current frame according to the trajectory planning information for the previous frame to obtain the corrected trajectory prediction result for the current frame includes the following steps:
performing encoding on the high-precision map or the travelable area in the map to obtain a third encoding result;
receiving the trajectory planning information for the previous frame for the vehicle and information on sensing the obstacle, and performing encoding on the trajectory planning information for the previous frame and the information on sensing the obstacle to obtain a fourth encoding result;
performing interaction relationship modeling on the third encoding result and the fourth encoding result, and decoding a high-dimensional feature of a process of the modeling, to obtain a trajectory prediction result for the vehicle;
taking the trajectory prediction result for the vehicle directly as an input to a current frame planning module to obtain a result from the current frame planning module.

Further, in the step of taking the trajectory prediction result for the vehicle directly as the input to the current frame planning module to obtain the result from the current frame planning module, vehicle planning is decoupled by a neural network into transverse trajectory planning and longitudinal trajectory planning, and the transverse trajectory planning and the longitudinal trajectory planning are corrected according to the trajectory prediction result for the vehicle to obtain trajectory planning for the current frame.

In particular, the present invention further discloses a trajectory prediction system in an autonomous driving system, including a processor and a memory, where the memory stores a program for performing the trajectory prediction method in the autonomous driving system.

Further, the processor includes a predicting unit, where the predicting unit includes the program, stored in the memory, for performing the trajectory prediction method in the autonomous driving system.

Further, when the predicting unit executes the program, a Transformer-based trainable neural network neural network is used.

In the prediction method provided in the present invention, during prediction, the high-precision map of the current frame and/or the travelable area in the map of the current frame are/is obtained, and the trajectory planning information of the previous frame for the vehicle is obtained, which can fully ensure a generated prediction trajectory being within the travelable area. In a process of prediction, the trajectory prediction result for the current frame is corrected according to the trajectory planning information for the previous frame to obtain the corrected trajectory prediction result for the current frame, so that rationality for traveling of each Agent (Agent) and interaction between different Agents can be fully considered.

Further, in the present invention, by receiving the high-precision map and/or the travelable area in the map, road topology constraint and travelable area constraint of a surrounding environment can be better modelled, so as to improve road traveling rationality of the trajectory prediction.

Further, in the present invention, by performing encoding respectively on multiple candidate trajectories from a trajectory generator and performing predictions respectively for surrounding Agents, vehicle planning possibility with more diversity can be given, and by performing evaluation on candidate trajectories with different trajectory predictions considered, it is beneficial for selecting a trajectory planning better than that in a traditional architecture.

Further, in the present invention, the visual information can be provided includes a trajectory map, a probability map, or a trajectory heat map, so that use requirements under different intelligent driving frameworks are fully considered.

According to the following detailed description of specific embodiments of the present invention in combination with accompanying drawings, the above and other purposes, advantages and features of the present invention will be more apparent to those skilled in the art.

### BRIEF DESCRIPTION OF DRAWINGS

Hereinafter with reference to accompanying drawings, some specific embodiments of the present invention will be described in detail in an example but not limiting manner. A same reference sign in drawings designates a same or similar component or part. Those skilled in the art should understand that these drawings are not necessarily drawn to scale. In the drawings:
FIG. 1 is a schematic diagram of steps of a trajectory prediction method in an autonomous driving system according to an embodiment of the present invention;
FIG. 2 is a logical block diagram of step S400 according to an embodiment of the present invention;
FIG. 3 is a structure diagram of a neural network used in a trajectory prediction method in an autonomous driving system according to an embodiment of the present invention;
FIG. 4 is a logical block diagram of step S400 according to an embodiment of the present invention;
FIG. 5 is a structure diagram of a neural network used in a trajectory prediction method in an autonomous driving system according to an embodiment of the present invention.

### DESCRIPTION OF EMBODIMENTS

### Embodiment 1

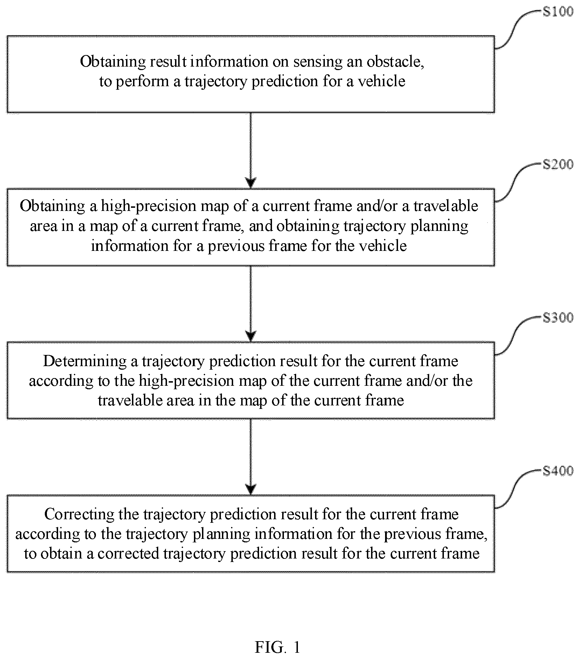

FIG. 1 is a schematic diagram of steps of a trajectory prediction method in an autonomous driving system according to an embodiment of the present invention. In particular, the embodiment discloses a trajectory prediction method in an autonomous driving system, which may generally include the following steps:
5100, obtaining result information on sensing an obstacle, to perform a trajectory prediction for a vehicle;
S200, obtaining a high-precision map of a current frame and/or a travelable area in a map of a current frame, and obtaining trajectory planning information for a previous frame for the vehicle;
S300, determining a trajectory prediction result for the current frame according to the high-precision map of the current frame and/or the travelable area in the map of the current frame; and
S400, correcting the trajectory prediction result for the current frame according to the trajectory planning information for the previous frame, to obtain a corrected trajectory prediction result for the current frame.

In the prediction method in the embodiment, during prediction, the high-precision map of the current frame and/or the travelable area in the map of the current frame are/is obtained, and the trajectory planning information for the previous frame for the vehicle is obtained, which can fully ensure a generated prediction trajectory being within the travelable area. In a process of prediction, the trajectory prediction result for the current frame is corrected according to the trajectory planning information for the previous frame to obtain the corrected trajectory prediction result for the current frame, so that rationality for traveling of each Agent (Agent) and interaction between different Agents can be fully considered.

According to an embodiment of the present invention, a high-precision map and a travelable area in a map in map information do not need to be satisfied at the same time, with either one being provided is sufficient. In a process of prediction, by performing an interaction between the two steps of prediction and planning, a traveling trajectory prediction result for a vehicle is corrected, so that rationality for traveling of each Agent (Agent) and interaction between different Agents can be fully considered. It can be understood that the high-precision map is a map with absolute precision at a sub-meter level in the prior art. The high-precision map is provided with not only high-precision coordinates, but also accurate road shape, and data for each lane including slope, curvature, heading, elevation, and inclination is also included therein. As for the travelable area in the map, it is generally a road travelable area perceived based on a camera-visually-detected image and a laser-radar-measured point cloud, which will not be described herein again.

According to an embodiment of the present invention, after step S 100, obtaining result information on sensing an obstacle, to perform a trajectory prediction for a vehicle, and before step S200, obtaining a high-precision map of a current frame and/or a travelable area in a map of a current frame, and obtaining trajectory planning information for a previous frame for the vehicle, a computer module executing relevant actions further obtains positioning information for the vehicle, where the three types of information belong to sensing information, map information and positioning information respectively, and after the three types of information is input into a neural network, the neural network simulates a complex classification function of human neurons, and outputs a prediction result according to the input information by establishing a "black box" predicting module.

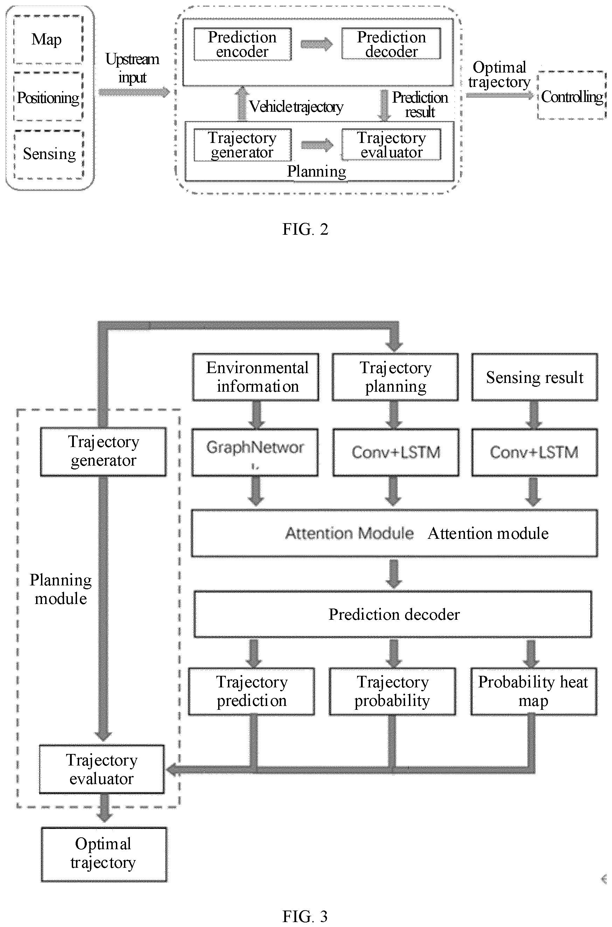

FIG. 2 is a logical block diagram of step S400 according to an embodiment of the present invention. FIG. 3 is a structure diagram of a neural network used in a trajectory prediction method in an autonomous driving system according to an embodiment of the present invention. According to an embodiment of the present invention, step S400, correcting the trajectory prediction result for the current frame according to the trajectory planning information for the previous frame to obtain the corrected trajectory prediction result for the current frame, specifically includes the following steps:
S401, performing encoding on the high-precision map for the current frame and/or the travelable area in the map for the current frame to obtain a first encoding result;
S402, receiving the trajectory planning information for the previous frame for the vehicle and information on sensing the obstacle, and performing encoding on the trajectory planning information for the previous frame and the information on sensing the obstacle to obtain a second encoding result;
S403, performing interaction relationship modeling on the first encoding result and the second encoding result; and
S404, decoding a high-dimensional feature used in a process of the modeling into a variety of visual information according to a requirement on output information.

According to an embodiment of the present invention, the actions of encoding performed in the above steps S401 and S402 are common actions in a neural network, and the specific principles thereof will not be described herein. It should still be noted that, after the actions of encoding are performed, the neural network performs processing and modelling on the encoded. In this case, an encoding operation is taken as a step of generally obtaining sample data by a neural network. The neural network generates a feature by performing machine learning on processing the sample data, and then performs the modeling in step S403 according to the feature.

According to an embodiment of the present invention, the high-dimensional feature in the above step 404 is a term in the field of neural networks. In a process of deep learning by a neural network, when a feature, extracted depending on the neural network, includes relatively much information, it is called a high-dimensional feature, for example, a set of features including an image grayscale, an image profile, and an image texture.

According to an embodiment of the present invention, in the above step 404, the requirement on the output information refers to a use requirement under different intelligent driving frameworks, and the visual information includes a trajectory map, a probability map, or a trajectory heat map. A neural network may output, according to the requirement on the output information, a prediction result in various forms, e.g., only outputting a trajectory map, or meanwhile outputting a trajectory probability map, or only outputting a trajectory heat map. Here, the trajectory map is a trajectory line composed by multiple points, the trajectory probability map is each trajectory line being marked with a probability value corresponding to the trajectory, and the trajectory heat map is a probability of being in a certain space in the future being represented in a form of a heat map. Use requirements under different intelligent driving frameworks are thus fully considered.

In a specific implementation scenario, by using the process of the specific implementation in the above steps S401-S404, firstly upstream sensing information, map information and positioning information are accessed, and encoded using a graph neural network (Graph Network) technology, secondly a planning result for a vehicle and result information on sensing an obstacle are accessed, and encoded using a convolutional network and a recurrent neural network, and finally encoding results of the three are sent to an attention module to perform interaction relationship modelling, then a high-dimensional feature is sent to a prediction decoder to decode into different visual information according to a downstream requirement.

According to an embodiment of the present invention, in step S404, decoding the high-dimensional feature used in the process of the modeling into a variety of visual information according to the requirement on the output information, multiple possible trajectories are evaluated by a neural network under multiple assumed interaction scenarios, to output an optimal trajectory under the multiple assumed interaction scenarios. Here, an interaction scenario refers to an interaction between different Agents, and mainly refers to an interaction between vehicles, such as avoiding and overtaking. In the embodiment, a predicting module and a planning module in the neural network are reconstructed. In a specific implementation process of the predicting module, the predicting module and the planning module are fully integrated, where the planning module may be decoupled into a trajectory generator and a trajectory predictor. Here, the trajectory generator is configured to generate multiple possible trajectories for a vehicle, and the predicting module is configured to receive the various possible trajectories to perform prediction for the multiple assumed scenarios of interaction, and output prediction results for the multiple assumed scenarios to a trajectory evaluator. The trajectory evaluator combines an evaluation technique such as cost function to give the optimal trajectory of the vehicle planning under the multiple assumed scenarios.

### Embodiment 2

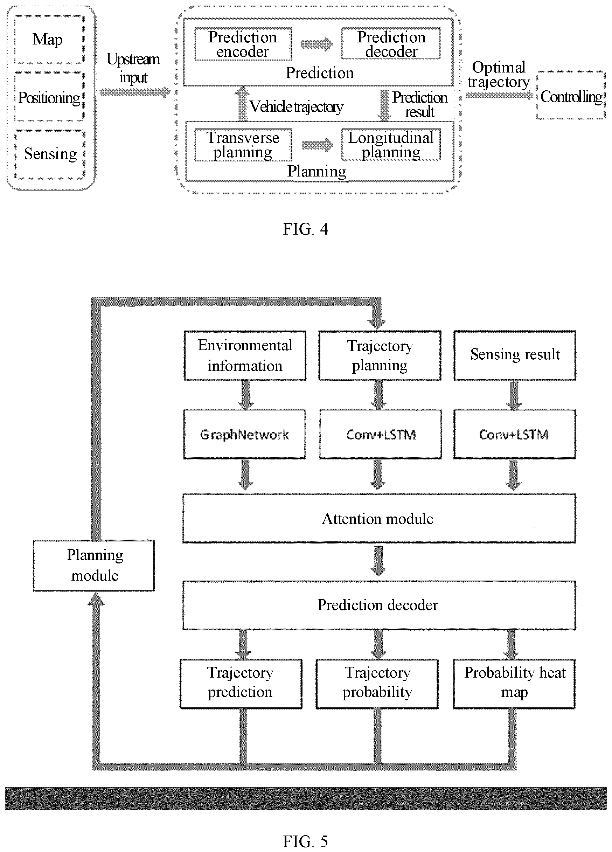

FIG. 4 is a logical block diagram of step S400 according to an embodiment of the present invention. FIG. 5 is a structure diagram of a neural network used in a trajectory prediction method in an autonomous driving system according to an embodiment of the present invention. In particular, the difference between this embodiment and embodiment 1 is that, step S400, correcting the trajectory prediction result for the current frame according to the trajectory planning information for the previous frame to obtain the corrected trajectory prediction result for the current frame, specifically includes the following steps:
S411, correcting the trajectory prediction result for the current frame according to the trajectory planning information for the previous frame, to obtain the corrected trajectory prediction result for the current frame includes the following steps:
S412, performing encoding on the high-precision map or the travelable area in the map to obtain a third encoding result;
S413, receiving the trajectory planning information for the previous frame for the vehicle and information on sensing the obstacle, and performing encoding on the trajectory planning information for the previous frame and the information on sensing the obstacle to obtain a fourth encoding result;
S414, performing interaction relationship modeling on the third encoding result and the fourth encoding result, and decoding a high-dimensional feature of a process of the modeling to obtain a trajectory prediction result for the vehicle; and
S415, taking the trajectory prediction result for the vehicle directly as an input to a current frame planning module to obtain a result from the current frame planning module.

According to an embodiment of the present invention, in step S415, taking the trajectory prediction result for the vehicle directly as the input to the current frame planning module to obtain the result from the current frame planning module, vehicle planning is decoupled by a neural network into transverse trajectory planning and longitudinal trajectory planning, and the transverse trajectory planning and the longitudinal trajectory planning are corrected according to the trajectory prediction result for the vehicle to obtain trajectory planning for the current frame.

### Embodiment 3

In particular, the present invention further discloses a trajectory prediction system in an autonomous driving system, including a processor and a memory, where the memory stores a program for performing the trajectory prediction method in the autonomous driving system in the above embodiment 1 or embodiment 2 or the combined solution of the two embodiments.

The processor includes a predicting unit, where the predicting unit includes the program, stored in the memory, for performing the trajectory prediction method in the autonomous driving system.

When the predicting unit executes the program, a Transformer-based trainable neural network neural network is used.

So far, those skilled in the art should realize that although a plurality of example embodiments of the present invention have been shown and described in detail herein, many other variations or modifications consistent with a principle of the present invention can still be directly determined or derived according to the content disclosed in the present invention without departing from the spirit and the scope of the present invention. Accordingly, the scope of the present invention should be understood and deemed to cover all such other variations or modifications.

## Claims

1. A trajectory prediction method in an autonomous driving system, obtaining result information on sensing an obstacle, to perform a trajectory prediction for a vehicle; wherein the method comprises the following steps:
obtaining a high-precision map of a current frame and/or a travelable area in a map of a current frame, and obtaining trajectory planning information for a previous frame for the vehicle;
determining a trajectory prediction result for the current frame according to the high-precision map of the current frame and/or the travelable area in the map of the current frame;
correcting the trajectory prediction result for the current frame according to the trajectory planning information for the previous frame, to obtain a corrected trajectory prediction result for the current frame.

2. The trajectory prediction method in the autonomous driving system according to claim 1, wherein the step of correcting the trajectory prediction result for the current frame according to the trajectory planning information for the previous frame to obtain the corrected trajectory prediction result for the current frame specifically comprises the following steps:
performing encoding on the high-precision map of the current frame and/or the travelable area in the map of the current frame to obtain a first encoding result;
receiving the trajectory planning information for the previous frame for the vehicle and information on sensing the obstacle, and performing encoding on the trajectory planning information for the previous frame and the information on sensing the obstacle to obtain a second encoding result;
performing interaction relationship modeling on the first encoding result and the second encoding result;
decoding a high-dimensional feature used in a process of the modeling into a variety of visual information according to a requirement on output information.

3. The trajectory prediction method in the autonomous driving system according to claim 2, wherein in the step of decoding the high-dimensional feature used in the process of the modeling into the variety of visual information according to the requirement on the output information, multiple possible trajectories are evaluated by a neural network under multiple assumed interaction scenarios, to output an optimal trajectory under the multiple assumed interaction scenarios.

4. The trajectory prediction method in the autonomous driving system according to claim 2 or 3, wherein the visual information comprises a trajectory map, a probability map or a trajectory heat map.

5. The trajectory prediction method in the autonomous driving system according to claim 1, wherein the step of determining the trajectory prediction result for the current frame according to the high-precision map of the current frame and/or the travelable area in the map of the current frame specifically comprises the following steps:
taking the high-precision map or the travelable area in the map as an input to a neural network;
generating, by the neural network, a plurality of possible trajectories as possible traveling paths for the vehicle.

6. The trajectory prediction method in the autonomous driving system according to claim 1, wherein the step of correcting the trajectory prediction result for the current frame according to the trajectory planning information for the previous frame to obtain the corrected trajectory prediction result for the current frame comprises the following steps:
performing encoding on the high-precision map or the travelable area in the map to obtain a third encoding result;
receiving the trajectory planning information for the previous frame for the vehicle and information on sensing the obstacle, and performing encoding on the trajectory planning information for the previous frame and the information on sensing the obstacle to obtain a fourth encoding result;
performing interaction relationship modeling on the third encoding result and the fourth encoding result, and decoding a high-dimensional feature of a process of the modeling, to obtain a trajectory prediction result for the vehicle;
taking the trajectory prediction result for the vehicle directly as an input to a current frame planning module, to obtain a result from the current frame planning module.

7. The trajectory prediction method in the autonomous driving system according to claim 6, wherein in the step of taking the trajectory prediction result for the vehicle directly as the input to the current frame planning module to obtain the result from the current frame planning module, vehicle planning is decoupled by a neural network into transverse trajectory planning and longitudinal trajectory planning, and the transverse trajectory planning and the longitudinal trajectory planning are corrected according to the trajectory prediction result for the vehicle to obtain trajectory planning for the current frame.

8. A trajectory prediction system in an autonomous driving system, comprising a processor and a memory, wherein the memory stores a program for performing the trajectory prediction method in the autonomous driving system according to any one of claims 1 to 7.

9. The trajectory prediction system in the autonomous driving system according to claim 8, wherein the processor comprises a predicting unit, and the predicting unit comprises the program, stored in the memory, for performing the trajectory prediction method in the autonomous driving system according to any one of claims 1 to 7.

10. The trajectory prediction system in the autonomous driving system according to claim 9, wherein when the predicting unit executes the program, a Transformer-based trainable neural network neural network is used.
